# EUROPÄISCHE PATENTSCHRIFT

(11) **EP 0 578 983 B1**
(45) Veröffentlichungstag und Bekanntmachung des Hinweises auf die Patenterteilung: **18.02.1998**
(21) Anmeldenummer: 93109590.5
(22) Anmeldetag: 16.06.1993
(51) Int. Cl.: C07F 7/22

(54) **Verfahren zur Herstellung von Trialkylzinnhydriden**
Process for the preparation of trialkyltinhydrides
Procédé de préparation d'hydrides d'étain trialkylique

(30) Priorität: 17.07.1992 DE 4223615
(43) Veröffentlichungstag der Anmeldung: 19.01.1994
(73) Patentinhaber: Witco GmbH, 59180 Bergkamen (DE)
(72) Erfinder: Becker, Ralf-Jürgen, Dr. Dipl.-Ing., W-4700 Hamm 4 (DE); Stewen, Ulrich, Dr. Dipl.-Chem., W-5840 Schwerte (DE); Weinberg, Udo, Chem., W-4709 Bergkamen (DE)

(56) Entgegenhaltungen:
- FR-A- 1 381 395
- CHEMISTRY & INDUSTRY Bd. 23, 1988, Seite 764 J. SZAMMER ET AL
- SYNTHESIS Bd. 9, 1983, Seite 722 A.B. CHOPA ET AL
- DATABASE WPIL Week 8721, Derwent Publications Ltd., London, GB; AN 87-145433

## Beschreibung

Die vorliegende Erfindung betrifft ein verbessertes Verfahren zur Herstellung von Trialkylzinnhydriden der allgemeinen Formel R₁R₂R₃SnH, die, bedingt durch die Prozeßführung, eine ausgezeichnete Lagerstabilität besitzen.

Organozinnhydride, insbesondere Tri-n-butylzinnhydrid, sind wertvolle und außerordentlich vielseitig einsetzbare Reagenzien für die Organische Synthese. Dieses wird durch eine Vielzahl von Publikationen demonstriert. Detaillierte Informationen sind einigen Übersichtsarbeiten zu entnehmen, z. B. W. P. Neumann, Synthesis 1987, 665; B. Giese, Radicals in Organic Synthesis: Formation of Carbon Bonds, Pergamon Press, Oxford 1986; M. Pereyre, J. P. Quintard und A. Rahm: Tin in Organic Synthesis, Butterworth, London 1987; D. P. Curran, Synthesis 1988, 417, 489; I. Omar, Organotin Chemistry, Elsevier, Amsterdam 1989; P. G. Harrison, Chemistry on Tin, Blackie, Glasgow and London 1989.

Der großtechnische Einsatz wurde bisher durch die begrenzte Stabilität der Organozinnhydride beschränkt, welches unmittelbar das Resultat unzureichender Produktions- und Reinigungsverfahren ist.

Die Instabilität wird insbesondere durch Spuren von Verunreinigungen hervorgerufen, die als Folge der Herstellung im Produkt verbleiben und direkt als Zersetzungskatalysatoren fungieren. So bewirken Spuren von Lewis-Säuren, wie z. B. Aluminiumhalogenide, Borhalogenide, Organoaluminium- und Organozinnhalogenide die sofortige Zersetzung.

Verfahren zur nachträglichen Stabilisierung von Organozinnhydriden wurden publiziert (z. B. DE 11 67 345 und DE 14 68 709). Die Reinigung durch zusätzliche Extraktion mit Alkoholen oder basischen Lösungen ist ineffizient und führt zu nicht akzeptablen Ausbeuteverlusten.

Verfahren zur Herstellung von Organozinnhydriden sind beschrieben. Diese haben die o. g. Nachteile und/oder liefern die Zinnhydride in schlechten Ausbeuten.

US-A-4 282 166 beschreibt ein Verfahren zur Herstellung von Trialkylzinnhydriden aus Trialkylzinnchlorid und Natrium-bis(2-alkoxyethoxy)aluminiumdihydrid.

In CA 90: 204.205 p wird die Reduktion von Trialkylzinnchlorid mit NaBH₄ in Ether-Wasser-Gemischen mit Ausbeuten von 65 - 80 % beschrieben.

In US-A-3 439 010 wird die Gewinnung von Trialkylzinnhydriden durch thermische Zersetzung von Trialkylzinnformiaten in Ausbeuten von ca. 80 % beschrieben.

Von NaH und Alkylzinnchloriden ausgehend wird die Herstellung von Organozinnhydriden in US-A-3 401 183 geschützt.

Ausgehend von Siloxanen bzw. Silanen können Alkylzinnoxide und -chloride zu Zinnhydriden umgesetzt werden (K. Hayashi et al, J. Organomet. Chem., 10 (1), 81 - 94; JP 43.010.134 (CA 69: 106.880 b); JP 43.010.133 (CA 69: 106.879 h); JP 43.012.132 (CA 70: 37 922 y); DE 3 119 643).

Die Verwendung von LiAIH₄ liefert Trialkylzinnhydride in Ausbeuten zwischen 66 - maximal 89 % (H. J. Albert, T. N. Mitchell, W. P. Neumann, Methodicum Chimicum, H. Zimmer, Ed., Vol. 7, Part A, Academic Press, New York, 1977, 361-2).

Trialkylzinnchloride können in guten Ausbeuten mit NaBH₄ umgesetzt werden, die Reaktionsführung und die Aufarbeitung sind aufwendig und umständlich (J. Organomet. Chem., 9 (2), 379-82 (1967).

Patent HU-A-41.412 (= HU-P-195.255) beschreibt ein Verfahren zur Herstellung von Tri-n-butylzinnhydrid aus Bis-[tri-n-butylzinn]oxid, welches dadurch gekennzeichnet ist, daß man Bis-[tri-n-butylzinn]oxid in einem aliphatischen Alkohol auflöst und bei einer Temperatur von 10 - 30 °C mit einer alkoholischen und/oder wäßrigen NaBH₄-Lösung für 10 - 60 min reagieren läßt. Nach aufwendigen Reinigungsschritten wird Tri-n-butylzinnhydrid in Ausbeuten zwischen 64 - 84 % isoliert.

Aufgabe der vorliegenden Erfindung war es, ein Verfahren bereitzustellen, welches es erlaubt, ausgehend von preiswerten, leicht erhältlichen Ausgangsverbindungen, hochreine Organozinnhydride in quantitativer Ausbeute herzustellen, die, anscheinend bedingt durch den Extraktions- und Neutralisationseffekt, frei sind von Zersetzungsinitiatoren oder -katalysatoren.

Überraschend wurde nun gefunden, daß man Trialkylzinnhydride der Formel R₁R₂R₃SnH in einfacher und sicherer Reaktionsführung erfindungsgemäß herstellen kann, indem man die Umsetzung in folgenden Reaktionsschritten durchführt:
a) die Umsetzung von Bis-[trialkylzinn]oxid mit einer durch Zusatz von Basen stabilisierten wäßrigen NaBH₄-Lösung erfolgt in Gegenwart eines inerten mit Wasser nicht oder nur teilweise mischbaren Lösungsmittels, wobei die Reaktionstemperatur etwa zwischen 0 und 100 °C, vorzugsweise 20 - 60 °C, gehalten wird
b) eine Nachreaktionszeit von 0 - 3 h eingehalten wird
c) das Produkt durch Separation der organischen von der wäßrigen Phase gewonnen wird
d) das Produkt nach Abdestillieren des Lösungsmittels gewonnen wird.

Vorteilhaft wird bei dem erfindungsgemäßen Verfahren ein inertes Lösungsmittel gewählt, das weder mit Organozinnhydriden noch mit NaBH₄ reagiert. Als Lösungsmittel kommen dabei infrage Diethylether, Dioxan, Acetonnitril, Kohlenwasserstoffe, vorzugsweise Tetrahydrofuran. Die Ausgangsverbindungen werden bevorzugt in stöchiometrischem oder annähernd stöchiometrischem Verhältnis eingesetzt im Bereich von 0,5 bis 1,5 mol NaBH₄ zu 1 mol Bis-[trialkylzinn]oxid.

Mit Vorteil wird zur sicheren Handhabung eine stabilisierte wäßrige NaBH₄-Lösung eingesetzt, wozu sich insbesondere Basen wie Natriumhydroxid eignen.

Vorzugsweise werden bei der Reduktion zur Beschleunigung 0,1 - 10 Gew.-% Wasserstoff-acide Verbindungen wie Thiosalicylsäure, Milchsäure, Laurylmercaptan, vorzugsweise Thioglycolsäure zugesetzt.

Vorteilhaft ist ferner der Zusatz von 0 - 10 Gew.-% Antioxidantien. Hierzu können typische Radikalfänger eingesetzt werden, wie z. B. BHT (2,6-Di-tert-butyl-4-methyl-phenol), 3-tert-Butyl-4-hydroxyanisol, Pyrogallol und/oder typische Metallionen-Desaktivatoren, wie z. B. Triphenylphosphin, 4,4-Thiobis(2-tert-butyl-5-methylphenol), Ethylendiamin-N,N,N',N'-tetra-2-propanol, N',N'-Diphenyl-1,4-phenylendiamin.

Im Gegensatz zu den bisher publizierten Verfahren garantiert die in den Ansprüchen definierte Reaktion eine einfache und sichere Reaktionsführung, deren Einsatzstoffe wohlfeil und preiswert sind.

Die Reaktion von Bis-[trialkylzinn]oxiden mit wäßriger, stabilisierter NaBH₄-Lösung läßt sich durch kontrolliertes Zudosieren des Reduktionsmittels einfach steuern. Die umgekehrte Reaktionsführung, d.h. Vorlegen der NaBH₄-Lösung, ist ohne Ausbeuteverlust möglich.

Die Reaktion läßt sich sowohl kontinuierlich als auch diskontinuierlich durchführen.

Während der Zudosierung bilden sich zwei Phasen. Die obere organische Phase enthält das Trialkylzinnhydrid und, sofern die Zudosierung noch nicht beendet ist, das noch nicht umgesetzte Bis-[trialkylzinn]oxid. Die untere wäßrige Phase enthält das Reduktionsmittel NaBH₄ sowie dessen Oxidationsprodukte.

Bedingt durch die Flüssig-flüssig-Reaktion werden Verunreinigungen, die über die Einsatzstoffe eingebracht werden, kontinuierlich aus der organischen Phase extrahiert. So werden z. B. Spuren vorhandener Lewissäuren, die die Zersetzung von Organozinnhydriden katalysieren, durch die basische NaBH₄-Lösung neutralisiert und in der wäßrigen Phase angereichert.

Ebenso werden Hilfsstoffe, wie z. B. als Reaktionsbeschleuniger wirkende Wasserstoff-acide Verbindungen oder Antioxidantien, aus der organischen Phase entfernt und kontaminieren somit nicht das Trialkylzinnhydrid.

Die Ausbeuten sind nahezu quantitativ, da bereits beginnend mit dem Starten der Reduktion die Abreicherung störender Verunreinigungen erfolgt.

Nach beendeter Reduktion wird die untere wäßrige Phase separiert und kann z. B. nach Anreicherung mit NaBH₄ wieder eingesetzt werden. Von der oberen organischen Phase, die das Organozinnhydrid enthält, wird das Lösungsmittel abdestilliert. Eine zusätzliche Reinigung des Produktes entfällt.

Der besondere Vorteil des Verfahrens ist, daß durch den Extraktions- und Neutralisationseffekt der basischen wäßrigen Phase Trialkylzinnhydride in hochreiner Form und in nahezu quantitativer Ausbeute hergestellt werden können. Die Trialkylzinnhydride sind ohne zusätzliche Reinigung frei von Zersetzungsinitiatoren oder -katalysatoren und besitzen hierdurch eine ausgezeichnete Lagerstabilität.

### Beispiele

### Beispiel 1

810 g Bis-[tributylzinn]oxid, versetzt mit 2,5 Gew.-% Thioglycolsäure als Beschleuniger, werden in 600 g THF gelöst. Eine Lösung aus 51,5 g NaBH₄ in 130 g Wasser und stabilisiert mit 12 g NaOH wird bei 60 °C innerhalb von 30 min zudosiert. Nach Abdestillieren des THF wird die wäßrige Phase abgetrennt und 770 g ( 97 %) Produkt isoliert.

### Beispiel 2

Die Verwendung von 1 - 5 Gew.-% Antioxidantien, wie z. B. BHT (= butylierte Hydroxytoluole), Hydrochinon oder Pyrogallol ist vorteilhaft, wenn die Reduktion ohne Schutzgas durchgeführt wird.

Aus der zu Beispiel 1 analogen Umsetzung, jedoch unter zusätzlicher Verwendung von 3 % BHT wird Tributylzinnhydrid in annähernd quantitativer Ausbeute isoliert.

### Beispiel 3

135 g Bis-[tributylzinn]oxid und 3,4 g Thioglycolsäure werden in 100 g Acetonitril vorgelegt. 8,5 g NaBH₄, gelöst in 20 g Wasser und stabilisiert mit 1,0 g NaOH, werden bei 20 °C zudosiert. Hierbei steigt die Temperatur auf ca. 38 °C an. Man läßt 1 h nachreagieren, trennt die Phasen und isoliert durch fraktionierte Destillation 123 g (93 %) Produkt.

### Beispiel 4

Analoge Umsetzung wie in Beispiel 3, jedoch unter Verwendung von Dioxan als Lösungsmittel.

### Beispiel 5

51 g NaBH₄, gelöst in 150 ml Wasser und stabilisiert mit 12 g NaOH und 600 g THF, werden vorgelegt. 810 g Bis-[tributylzinn]oxid und 34,8 g Thiosalicylsäure werden zudosiert und 10 min auf Rückflußtemperatur erwärmt. Nach Abkühlung wird die organische Phase abgetrennt und zur Destillation eingesetzt. Die TBTH-Ausbeute beträgt 770 g (97 %).

### Beispiel 6

Die Reaktionsbedingungen werden analog zu Beispiel 5 gewählt. Statt Thiosalicylsäure wird Milchsäure als Beschleuniger eingesetzt.

### Beispiel 7

Die Reaktionsbedingungen werden analog zu Beispiel 5 gewählt. Statt Thiosalicylsäure wird Laurylmercaptan als Beschleuniger eingesetzt.

### Beispiel 8

306 g Bis-[tributylzinn]oxid und 257 g THF, stabilisiert mit 0,025 % BHT, werden vorgelegt. Eine Lösung aus 14,6 g NaBH₄ in 50 ml 1 n NaOH wird bei 40 °C zudosiert. Nach 1 h bei 50 °C und bereits beschriebener Aufarbeitung werden 290 g (96 %) Tributylzinnhydrid isoliert.

### Beispiel 9

306 g Bis-[trioctylzinn]oxid und 257 g THF, stabilisiert mit 0,64 g BHT, werden vorgelegt. Eine Lösung aus 12,4 g NaBH₄ in 50 ml 1 n wäßriger Natronlauge wird bei 40 °C zudosiert. Nach 2 h bei 50 °C und bereits beschriebener Aufarbeitung werden 300 g (100 %) Trioctylzinnhydrid isoliert.

### Beispiel 10

9,3 g NaBH₄ in 25 g Wasser und stabilisiert mit 2,2 g NaOH werden mit 150 g THF, stabilisiert mit 0,025 % BHT, versetzt. 189 g Bis-[trihexylzinn]oxid und 3,7 g Thioglycolsäure werden bei Raumtemperatur zudosiert. Nach 10 min bei 65 °C wird abgekühlt und die organische Phase abgetrennt. Nach Fraktionierung werden 170 g (92 %) Tri-hexylzinnhydrid isoliert.

### Beispiel 11

Die Herstellung von Trineophylzinnhydrid wird analog zu Beispiel 10 durchgeführt.

### Beispiel 12

Die Herstellung von Tri-iso-butylzinnhydrid wird analog zu Beispiel 10 durchgeführt.

## Patentansprüche

1. Verfahren zur Herstellung von Trialkylzinnhydriden der allgemeinen Formel R₁R₂R₃SnH, wobei R₁, R₂, R₃ verzweigte und/oder unverzweigte und/oder substituierte Alkylgruppen darstellen, die gleich oder verschieden sein können, gekennzeichnet durch folgende Verfahrensschritte:
a) die Umsetzung von Bis-[trialkylzinn]oxid mit einer durch Zusatz von Basen gegen Zersetzung stabilisierten wäßrigen NaBH₄-Lösung erfolgt in Gegenwart eines inerten mit Wasser nicht oder nur teilweise mischbaren Lösungsmittels, wobei die Reaktionstemperatur etwa zwischen 0 und 140 °C gehalten wird
b) eine Nachreaktionszeit von 0 - 3 h eingehalten wird
c) eine Separation der organischen von der wäßrigen Phase durchgeführt wird
d) das Produkt nach Abdestillieren des Lösungsmittels gewonnen wird.

2. Verfahren gemäß Anspruch 1, dadurch gekennzeichnet, daß als inertes Lösungsmittel ein Lösungsmittel eingesetzt wird, das weder mit Organozinnhydriden noch mit NaBH₄ reagiert.

3. Verfahren gemäß den Ansprüchen 1 und 2, dadurch gekennzeichnet, daß das molare Verhältnis zwischen Bis-[trialkylzinn]oxid und NaBH₄ ca. 1 : 1 beträgt.

4. Verfahren gemäß den Ansprüchen 1 bis 3, dadurch gekennzeichnet, daß zur Stabilisierung der wäßrigen NaBH₄-Lösung als Base Natriumhydroxid eingesetzt wird.

5. Verfahren gemäß den Ansprüchen 1 bis 4, dadurch gekennzeichnet, daß die Reduktion durch Zusatz von 0,1-10 Gew.-% Wasserstoff-acide Verbindungen beschleunigt wird.

6. Verfahren gemäß den Ansprüchen 1 bis 5, dadurch gekennzeichnet, daß die Reduktion in Gegenwart von 0,01-10 Gew.-% Antioxidantien durchgeführt wird.

## Claims

1. Process for the preparation of trialkyltin hydrides of the general formula R₁R₂R₃SnH, wherein R₁, R₂ and R₃ represent branched and/or unbranched and/or substituted alkyl groups that may be the same or different, characterised by the following process steps:
a) the reaction of bis[trialkyltin] oxide with an aqueous NaBH₄ solution that has been stabilised against decomposition by the addition of bases is carried out in the presence of an inert solvent that is not miscible or is only partly miscible with water, the reaction temperature being maintained at approximately from 0 to 140°C,
b) a post-reaction time of from 0 to 3 hours is maintained,
c) separation of the organic phase from the aqueous phase is carried out, and
d) the product is obtained after removal of the solvent by distillation.

2. Process according to claim 1, characterised in that there is used as inert solvent a solvent that does not react either with organotin hydrides or with NaBH₄.

3. Process according to claims 1 and 2, characterised in that the molar ratio of bis[trialkyltin] oxide to NaBH₄ is approximately 1:1.

4. Process according to claims 1 to 3, characterised in that sodium hydroxide is used as the base for stabilising the aqueous NaBH₄ solution.

5. Process according to claims 1 to 4, characterised in that the reduction is accelerated by the addition of from 0.1 to 10% by weight of hydrogen-acid compounds.

6. Process according to claims 1 to 5, characterised in that the reduction is carried out in the presence of from 0.01 to 10% by weight of antioxidants.

## Revendications

1. Procédé de préparation d'hydrure de trialkylétain de formule générale R₁R₂R₃SnH, où R₁, R₂, R₃ représentent des groupes alkyle à chaîne ramifiée et/ou non ramifiée et/ou substituée, qui peuvent être identiques ou différents, caractérisé par les étapes de procédé suivants :
a) la réaction de l'oxyde de bis-[trialkylétain] avec une solution aqueuse de NaBH₄, stabilisée par addition de bases contre la décomposition, a lieu en présence d'un solvant inerte, non miscible ou seulement partiellement miscible à l'eau, la température réactionnelle étant maintenue à des valeurs comprises environ entre 0 et 140 °C ;
b) on observe une durée post-réactionnelle de 0 à 3 heures ;
c) on réalise une séparation de la phase organique et de la phase aqueuse ;
d) on obtient le produit en chassant le solvant par distillation.

2. Procédé selon la revendication 1, caractérisé en ce que l'on emploie comme solvant inerte, un solvant qui ne réagit ni avec les hydrures d'organoétain ni avec NaBH₄.

3. Procédé selon les revendications 1 et 2, caractérisé en ce que le rapport molaire entre l'oxyde de bis-[trialkylétain] et NaBH₄ est d'environ 1:1.

4. Procédé selon les revendications 1 à 3, caractérisé en ce que l'on emploie l'hydroxyde de sodium comme base pour la stabilisation de la solution aqueuse de NaBH₄.

5. Procédé selon les revendications 1 à 4, caractérisé en ce que l'on accélère la réduction par ajout de 0,1-10 % en poids de composés comportant un hydrogène acide.

6. Procédé selon les revendications 1 à 5, caractérisé en ce que l'on met en oeuvre la réduction en présence de 0,01 à 10 % en poids d'antioxydants.
